# EUROPEAN PATENT APPLICATION

(11) **EP 2 690 770 A2**
(43) Date of publication of application: **29.01.2014**
(21) Application number: 13178088.4
(22) Date of filing: 25.07.2013
(51) Int. Cl.: H02M 1/10, H02J 3/02

(54) **Power supplies for simultaneously providing AC and DC power**

(30) Priority: 26.07.2012 US 201213558707
(71) Applicant: Astec International Limited, Kwun Tong, Kowloon Hong Kong (CN)
(72) Inventor: Markowski, Piotr, Kowloon (CN); Stiedl, Andreas, Kowloon (CN); Kropf, Karl, Kowloon (CN); Etlinger, Harald Herbert, Kowloon (CN); Riedmueller, Klaus, Kowloon (CN)
(74) Representative: Morrall, Jonathan Ian McLachlan

(57) **Abstract**

A power supply (100) for providing power to a load includes a first subconverter (106) having input terminals for coupling to a first input power source and output terminals and a second subconverter (110) having input terminals for coupling to a second input power source and output terminals. The first subconverter is configured to supply an AC current and an AC voltage at its output terminals. The second subconverter is configured to supply one of a substantially constant DC current and a substantially constant DC voltage at its output terminals. At least one of the output terminals of the first subconverter is coupled to at least one of the output terminals of the second subconverter. The power supply is configured to supply the AC current, the AC voltage, the substantially constant DC current and the substantially constant DC voltage substantially simultaneously to the load (102).

## Description

### FIELD

The present disclosure relates to power supplies for simultaneously providing AC and DC power.

### BACKGROUND

This section provides background information related to the present disclosure which is not necessarily prior art.

Power supplies capable of producing rapidly changing voltage and/or current are important for many applications. These applications include, for example, point of load converters for large microprocessors, high speed drives, high efficiency audio amplifiers, ultrasound equipment, radar equipment, envelope tracking for RF amplifiers, etc. Among the most demanding are applications where output power contains both DC and AC quantities for both voltage and current. For example, envelope tracking power supplies for RF amplifiers may be required to output high bandwidth AC voltage and AC current along with significant quantities of DC voltage and DC current.

### SUMMARY

This section provides a general summary of the disclosure, and is not a comprehensive disclosure of its full scope or all of its features.

According to one aspect of the present disclosure, a power supply for providing power to a load includes a first subconverter having input terminals for coupling to a first input power source and output terminals, and a second subconverter having input terminals for coupling to a second input power source and output terminals. The first subconverter is configured to supply an AC current and an AC voltage at its output terminals. The second subconverter is configured to supply one of a substantially constant DC current and a substantially constant DC voltage at its output terminals. At least one of the output terminals of the first subconverter is coupled to at least one of the output terminals of the second subconverter. The power supply is configured to supply the AC current, the AC voltage, the substantially constant DC current and the substantially constant DC voltage substantially simultaneously to the load.

Further aspects and areas of applicability will become apparent from the description provided herein. It should be understood that various aspects of this disclosure may be implemented individually or in combination with one or more other aspects. It should also be understood that the description and specific examples herein are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.

Fig. 1 is a block diagram of a power supply having three power converters according to one example embodiment of the present disclosure.

Fig. 2 is a circuit diagram of the power supply of Fig. 1 employing buck switching converters.

Fig. 3 is an example control circuit of one buck switching converter of the power supply of Fig. 2.

Fig. 4 is another example control circuit of one buck switching converter of the power supply of Fig. 2.

Fig. 5 is a block diagram of a power supply having three power converters according to another embodiment of the present disclosure.

Fig. 6 is a block diagram of a power supply having three power converters according to yet another embodiment of the present disclosure.

Fig. 7 is a block diagram of a power supply having three power converters according to still another embodiment of the present disclosure.

Fig. 8 is a graph illustrating an example output voltage of a power supply.

Fig. 9 is a block diagram of a power supply having two power converters according to still yet another embodiment of the present disclosure.

Fig. 10 is a block diagram of a power supply having two power converters according to another embodiment of the present disclosure.

Fig. 11 is a block diagram of a power supply having two power converters according to still another embodiment of the present disclosure.

Corresponding reference numerals indicate corresponding parts throughout the several views of the drawings.

### DETAILED DESCRIPTION

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

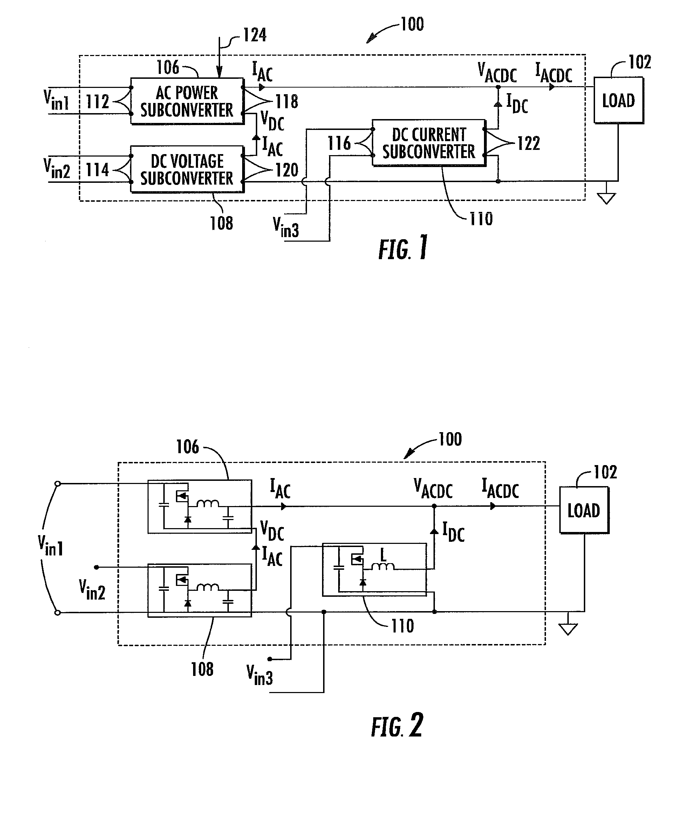

A power supply according to one example embodiment of the present disclosure is illustrated in Fig. 1 and indicated generally by reference number 100. The power supply 100 is configured to provide power to a load 102. As shown in Fig. 1, the power supply 100 includes three subconverters 106, 108, 110. The subconverters 106, 108, 110 each include input terminals 112, 114, 116 for coupling to different input power sources Vin1, Vin2, Vin3. The subconverters 106, 108, 110 also include output terminals 118, 120, 122.

According to the present disclosure, some or all of the DC power required by the load can be provided by subconverter(s) other than the subconverter providing the AC power required by the load. For example, one of the subconverters 106, 108, 110 may be configured to supply an AC current IAC and an AC voltage VAC, another one of the subconverters 106, 108, 110 may be configured to supply a substantially constant DC current IDC, and a third one of the subconverters may be configured to supply a substantially constant DC voltage VDC. As a result, one or more of the subconverter(s) can be optimized for providing DC power, and the voltage and current stress experienced by the subconverter providing the AC power can be reduced, which may result in higher efficiencies and lower component costs.

The power supply 100 may include one or more control circuits (not shown in Fig. 1) for controlling operation of the subconverters 106, 108, 110. The control circuit(s) may reside internal or external to one or more of the subconverters 106, 108, 110. Further, each subconverter may have a dedicated control circuit. Alternatively, a single control circuit may be used to control operation of two or more subconverters.

In the example embodiments described herein, the subconverter 106 is configured to provide the AC current IAC and the AC voltage VAC, the subconverter 108 (when employed) is configured to provide some or all of the DC voltage VDC (and no AC current or voltage), and the subconverter 110 (when employed) is configured to provide some or all of the DC current IDC (and no AC current or voltage). The AC current IAC and the AC voltage VAC provided by subconverter 106 are time varying functions for a given control input (not shown) that may change frequently, including continuously. Further, the AC current IAC and the AC voltage VAC provided by subconverter 106 may be bipolar (i.e., having positive and negative values).. The AC current IAC and the AC voltage VAC provided by subconverter 106 may also include some DC content. If the AC current IAC and the AC voltage VAC provided by subconverter 106 include sufficient DC content, the AC current IAC and the AC voltage VAC may be unipolar (i.e., having only positive or zero values). Thus, as used herein, "AC" does not necessarily require alternating current.

Further, the AC current IAC and the AC voltage VAC may be low bandwidth AC current and voltage (e.g., ranging from several kHz to several tens of kHz) or high bandwidth AC current and voltage (e.g., 100kHz and above).

The substantially constant DC current IDC and the substantially constant DC voltage VDC collectively provided by the subconverters 106, 108, 110 may include fixed DC current and DC voltage or slowly varying DC current and DC voltage. The slowly varying DC current and DC voltage (when applicable) are varied substantially slower than the respective AC quantities produced by the subconverter 106. For example, the slowly varying DC quantities may have a maximum power spectral density ten times or more lower than a power spectral density of the respective AC quantities.

The output terminals 118, 120, 122 of the subconverters 106, 108, 110 may be coupled to each other and/or the load in various ways. For example, the output terminals of one of the subconverters 106, 108, 110 may be coupled in parallel with a series combination of the output terminals of the other two subconverters 106, 108, 110. Alternatively, the output terminals of one of the subconverters 106, 108, 110 may be coupled in series with a parallel combination of the output terminals of the other two subconverters 106, 108, 110. Accordingly, at least one of the output terminals of each subconverter may be coupled to at least one of the output terminals of the other subconverters.

In the power supply 100 of Fig. 1, the subconverter 106 is configured to supply the AC current IAC and the AC voltage VAC required by the load 102, the subconverter 108 is configured to supply some or all of the substantially constant DC voltage VDC required by the load 102, and the subconverter 110 is configured to supply some or all of the substantially constant DC current IDC required by the load 102. Further, in the particular example shown in Fig. 1, the output terminals 122 of the DC current subconverter 110 are coupled in parallel with the series combination of the output terminals 118, 120 of the AC power subconverter 106 and the DC voltage subconverter 108. Additionally, one of the output terminals 120 of the DC voltage subconverter 108 is coupled to a reference voltage, such as earth ground or another suitable reference potential.

If the subconverter 106 provides the AC current IAC and the AC voltage VAC with little or no DC content, the subconverter 106 may need to be capable of operating in all four quadrants of V-I plane. In other words, the subconverter 106 may need to produce positive and negative voltages by sinking and sourcing current at its output terminals 118.

Alternatively, the subconverter 106 may provide a portion of the DC voltage and/or DC current required by the load 102, in addition to the DC voltage provided by the subconverter 108 and the DC current provided by subconverter 110. If the DC voltage and/or DC current provided by the subconverter 106 are sufficiently large, the subconverter 106 may not need to operate in all four quadrants of V-I plane (i.e., because the AC current IAC and the AC voltage VAC are unipolar), which may simplify its structure and control.

Referring again to Fig. 1, because the output terminals 118 of the AC power subconverter 106 are coupled in series with the output terminals 120 of the DC voltage subconverter 108, the DC voltage subconverter 108 is preferably configured to supply a constant DC voltage while also passing the AC current IAC (and any DC component in the output current of subconverter 106, when applicable) between its output terminals 120.

Additionally, because the output terminals 122 of the DC current subconverter 110 are coupled in parallel with the series combination of the AC power subconverter 106 and the DC voltage subconverter 108, the DC current subconverter 110 is preferably configured to withstand the AC voltage VAC and the DC voltage VDC across its output terminals 122.

In the example of Fig. 1, the DC voltage subconverter 108 and the DC current subconverter 110 may be exposed to either the AC current IAC or the AC voltage VAC supplied by the AC power subconverter 106, but not both the AC current IAC and the AC voltage VAC. Thus, a filter may be employed to substantially block or shunt the AC voltage VAC and/or AC current IAC at the output terminals 120, 122 of the DC voltage and current subconverters 108, 110. These filters may also facilitate operation of the DC voltage and current subconverters 108, 110 with low switching frequencies if switch-mode power converters are employed. For example, the DC voltage subconverter 108 may include one or more capacitors configured to shunt the AC current IAC and/or the DC current subconverter 110 may include one or more inductors configured to block high frequency AC voltage (e.g., AC voltage VAC).

The subconverters 106, 108, 110 are preferably isolated or non-isolated switch mode power supplies (SMPS) having any suitable converter topology, including buck converters, boost converters, buck-boost converters, full bridge converters, half bridge converters, push-pull converters, resonant converters, etc.

The subconverters 106, 108, 110 may each employ the same power converter topology. Alternatively, one of the subconverters may employ a different topology than one or more other subconverters. By way of example only, Fig. 2 illustrates an implementation of the power supply 100 of Fig. 1 employing a switching converter with a buck topology for each subconverter 106, 108, 110.

Although three subconverters are shown in Fig. 1, it should be understood the teachings of the present disclosure may be implemented using only two subconverters, or using more than three subconverters.

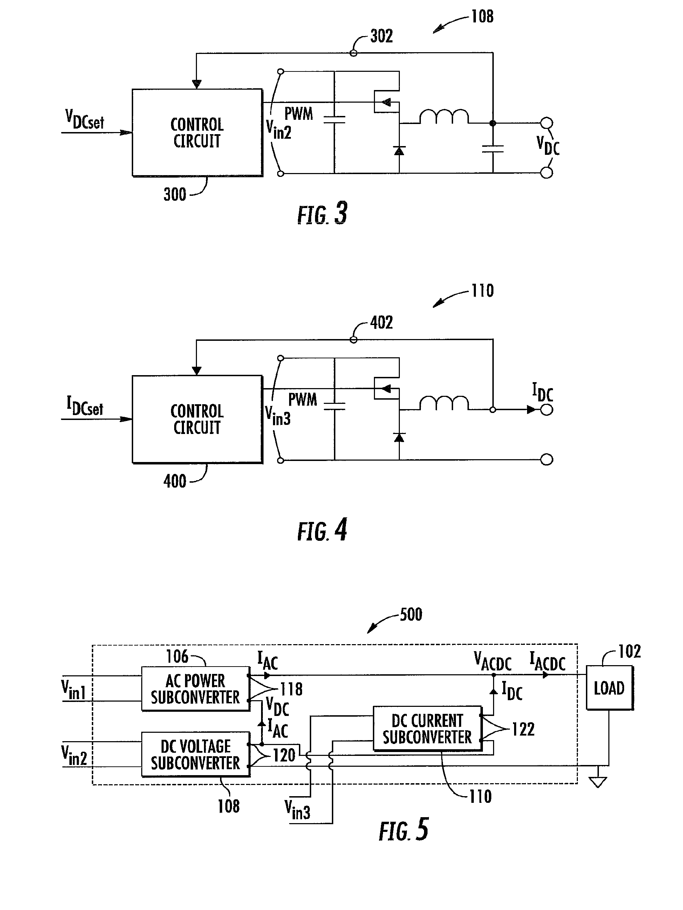

Fig. 3 illustrates an example implementation of the DC voltage subconverter 108 that includes a control circuit 300. The control circuit 300 includes an input configured to receive a feedback signal 302 representing an output DC voltage VDC of the DC voltage subconverter 108, an input configured to receive an output voltage set signal VDCset and an output configured to transmit a signal (shown as a PWM signal in Fig. 3) to a switching device in the DC voltage subconverter 108. The output DC voltage VDC of the DC voltage subconverter 108 may be set by the output voltage set signal VDCset. By sensing the output voltage VDC and by employing suitable filter parameters (as described above with reference to Fig. 1), the DC voltage subconverter 108 may have a substantially constant DC output voltage even while it passes a variable current (e.g., the AC current IAC) between its output terminals 120.

Fig. 4 illustrates an example implementation of the DC current subconverter 110 that includes a control circuit 400. The control circuit 400 includes inputs for receiving a feedback signal 402 representing an output DC current IDC of the DC current subconverter 110, and an output current set signal IDCset. The output DC current IDC of the DC current subconverter 110 may be set by the output current set signal IDCset. The control circuit 400 further includes an output configured to transmit a signal (e.g., a PWM signal) to a switching device in the DC current subconverter 110. By sensing the output current IDC and by employing suitable filter parameters (as described above with reference to Fig. 1), the DC current subconverter 110 may have a stable DC output current even while exposed to a variable load voltage VACDC across its output terminals 122.

Additionally, any suitable control circuit may be employed to control the AC power subconverter 106, autonomously or in response to one or more control signal(s) 124 provided to the power supply 100. For example, a control circuit similar to the control circuits 300, 400 may be employed to control the AC power subconverter 106. If the power supply 100 is an envelope-tracking power supply, the control signal 124 may be an envelope signal.

The control circuit of the AC power subconverter 106 and the control circuits 300, 400 may be integrated or coupled together to form a control circuit for the power supply 100. Alternatively, the control circuit of the AC power subconverter 106 and the control circuits 400, 500 may be separate, distinct control circuits that operate independently of one another.

The control circuit(s) for the subconverters may include analog and/or digital components. In some embodiments, the control circuit(s) include one or more digital processors, such as microprocessors and/or digital signal processors (DSPs), for controlling operation of the subconverters 106, 108, 110.

Figs. 5-7 illustrate power supplies 500, 600, 700. Each power supply 500, 600, 700 includes the subconverters 106, 108, 110 described above with reference to Fig. 1. However, the output terminals 118, 120, 122 of the subconverters 106, 108, 110 shown in Figs. 5-7 are coupled together in different configurations as compared to Fig. 1 .

In the example of Fig. 5, the output terminals 120 of the DC voltage subconverter 108 are coupled in series with the parallel combination of the output terminals 118, 122 of the AC power subconverter 106 and the DC current subconverter 110.

With this configuration, the voltage across the output terminals 122 of the DC current subconverter 110 is reduced, and the current flowing through the DC voltage subconverter 108 is increased, as compared to the configuration illustrated in Fig. 1. That is, the DC current subconverter 110 is exposed only to the voltage supplied by the AC power subconverter 106. However, the current flowing through the DC voltage subconverter 108 is increased because the DC voltage subconverter 108 has to pass between its output terminals 120 both the AC current IAC supplied by the AC power subconverter 106 and the DC current IDC supplied by the DC current subconverter 110.

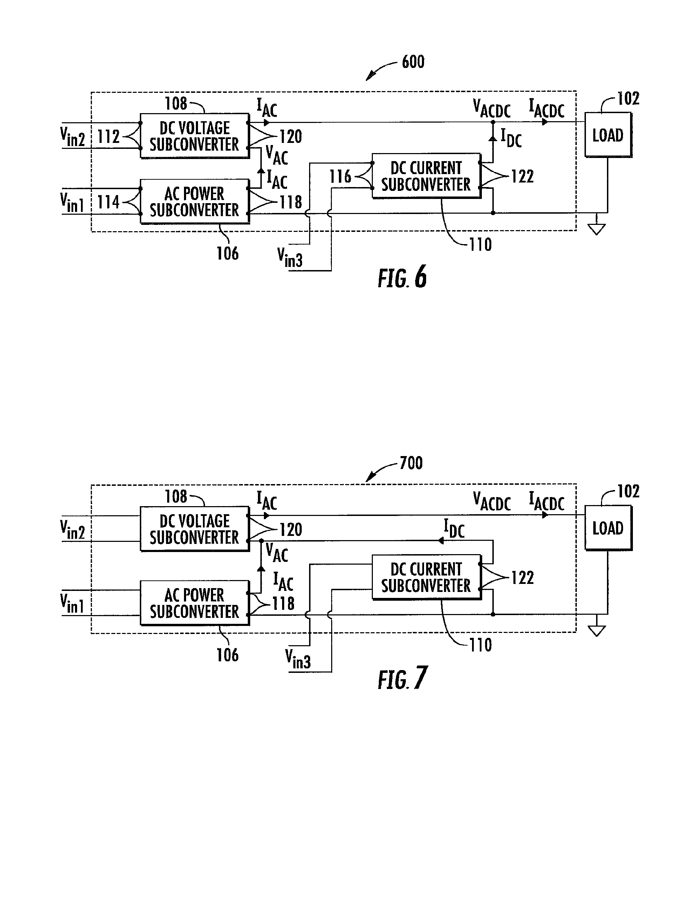

In the examples of Figs. 6 and 7, the positions of the AC power subconverter 106 and the DC voltage subconverter 108 are reversed (relative to the reference voltage) as compared to their positions in Fig. 1. Accordingly, one of the output terminals 118 of the AC power subconverter 106 is coupled to the reference voltage.

Additionally, in the example of Fig. 7, the output terminals 120 of the DC voltage subconverter 108 are coupled in series with the parallel combination of the output terminals 118, 122 of the AC power and DC current subconverters 106, 110.

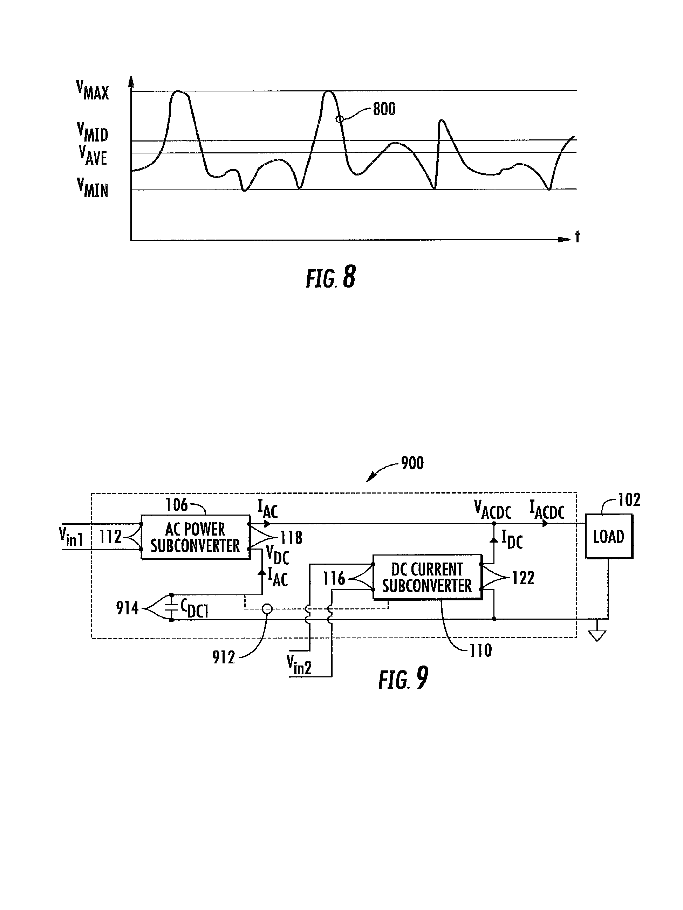

Fig. 8 illustrates an example waveform 800 of an output voltage of the power supply 100 of Fig. 1. The output voltage has a variable voltage pattern formed by the AC voltage VAC and the DC voltage VDC.

In Fig. 8, a maximum momentary voltage amplitude required by the load 102 is represented by the line VMAX, a minimum momentary voltage amplitude required by the load 102 is represented by the line VMIN, and a midpoint of the variable voltage pattern (i.e., the average of the line VMIN and the line VMAX) is represented by the line VMID. Further, the average voltage required by the load 102 is represented by the line VAVE.

The DC voltage subconverter 108 may be configured to supply a constant DC voltage having the average voltage required by the load 102 (i.e., represented by the line VAVE). In that case, the AC power subconverter 106 may operate with a momentary output voltage ranging from VMIN VAVE (i.e., a negative voltage) to VMAX - VAVE (i.e., a positive voltage), and have an average output voltage of zero.

However, if the AC power subconverter 106 is configured to supply AC power with no DC content, its positive and negative output voltage ranges may not be equal, resulting in an asymmetrical voltage stress on the AC power subconverter 106. This may require using components with higher voltage ratings. Additionally (or alternatively), it may be advantageous to add a DC component to the output of the AC power subconverter 106. For example, the added DC component may be equal to the difference between VMID and VAVE. In that case, the output voltage operating range of the AC power subconverter 106 may be divided into two equal parts, and the AC power subconverter 106 may be configured to operate with a symmetrical output voltage ranging from VMIN - VMID (i.e., a negative voltage) to VMAX - VMID(i.e., a positive voltage).

As another alternative, the AC power subconverter 106 may be configured to supply only unipolar voltages (i.e., having only positive or zero values). This may simplify the design and reduce the cost of the AC power subconverter 106. The amplitude of the DC voltage VDC supplied by DC voltage subconverter 108 may be reduced to the lowest possible amplitude required by the load 102 during operation (i.e., represented by the line Vmin in the example of Fig. 8). In that case, the output voltage of the AC power subconverter 106 may vary from zero to the positive value of VMAX - VMIN, with the AC power subconverter 106 effectively providing a DC component equal to VAVE - VMIN. Thus, the sum of the DC power components supplied by the AC power subconverter 106 and the DC voltage subconverter 108 will equal VAVE as required by the load.

The AC and DC output voltage relationships described above may apply to any implementation of these teachings, including the example embodiments disclosed herein. Additionally, the AC and DC output current relationships for the AC power subconverter 106 and the DC current subconverter 110 may be similar to the voltage relationships described above.

From the example embodiments described herein, it should be apparent that the output voltages and/or currents of the AC power subconverter 106, the DC voltage subconverter 108 and the DC current subconverter 110 may be set at various levels depending on system requirements and design tradeoffs for any given implementation.

Fig. 9 illustrates a power supply 900 according to another example embodiment. The power supply 900 includes the AC power subconverter 106 coupled to the input power source Vin1 and the DC current subconverter 110 coupled to the input power source Vin2. The power supply 900 further includes a capacitor CDC1 coupled in series with the AC power subconverter 106 for providing some or all of the DC voltage VDC required by the load. As shown in Fig. 9, the power supply 900 may employ only two input power sources Vin1, Vin2.

As shown in Fig. 9, the output terminals 122 of the DC current subconverter 110 are coupled in parallel with a series combination of the capacitor CDC1 and the output terminals 118 of the AC power subconverter 106. In this particular embodiment, the AC power subconverter 106 is configured to supply the AC voltage VAC and the AC current IAC with no DC content. Therefore, the DC current subconverter 110 provides all of the DC current IDC required by the load. If, instead, the output current of the AC power subconverter 106 includes a DC component, the DC voltage VDC provided by the capacitor CDC1 may drift, and an erroneous output voltage may be provided to the load 102.

The capacitor CDC1 may experience leakage (i.e., lose its stored electrical charge) due to its finite internal resistance. Thus, a small quantity of DC current provided by the DC current subconverter 110 (in addition to the DC current IDC required by the load) may be needed to maintain a desired charge of the capacitor CDC1.

Additionally, the DC component of the output voltage VACDC required by the load 102 may change over time. In that event, it may be desirable to alter the DC current IDC delivered by the DC current subconverter 110. Any difference between the current provided by the DC current subconverter 110 and the DC current required by the load will pass through the capacitor CDC1. This in turn changes the amount of electrical charge stored in the capacitor CDC1 and thus, the voltage across the capacitor CDC1. Accordingly, to maintain a desired level of DC current IDC to the load 102, the DC current subconverter 110 may be configured to sense the voltage VDC across the capacitor CDC1. This is shown in Fig. 9 by the dashed line 912. Alternatively, the DC current subconverter 110 may be configured to sense the DC component of the output voltage VACDC and control its power processing components in a way that maintains the voltage across the capacitor CDC1 at a desired voltage level, which may be a substantially constant voltage level or a slowly varying voltage level.

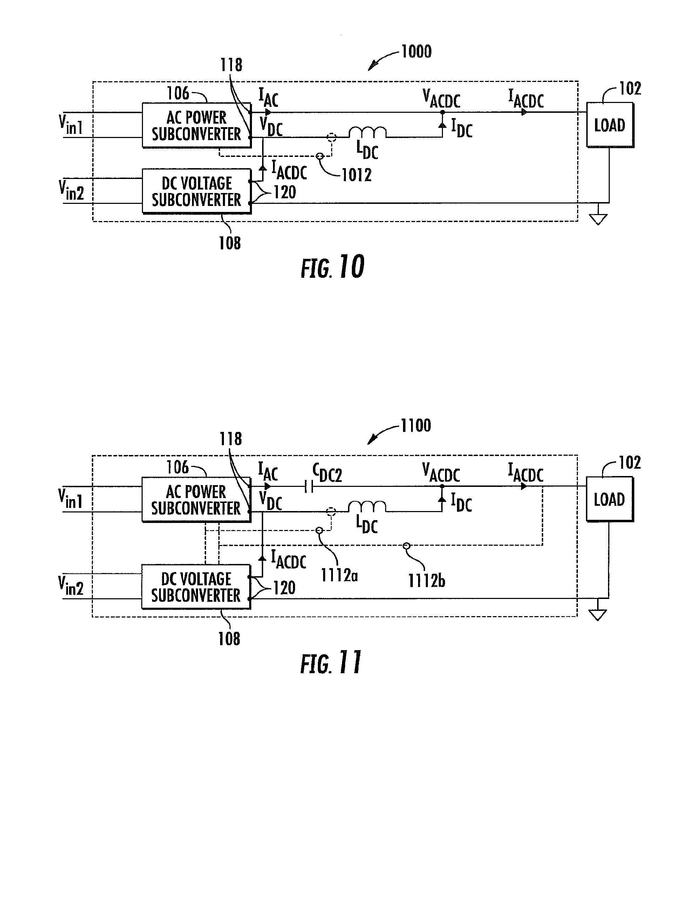

Fig. 10 illustrates a power supply 1000 according to still another example embodiment. The power supply 1000 includes the AC power subconverter 106 coupled to the input power source Vin1 and the DC voltage subconverter 108 coupled to the input power source Vin2. The power supply 900 further includes an inductor LDC coupled between the output terminals 118 of the AC power subconverter 106 for providing some or all of the DC current IDC required by the load. Further, the power supply 1000 employs only two input power sources Vin1, Vin2.

As shown in Fig. 10, the DC voltage subconverter 108 is coupled in series with a parallel combination of the inductor LDC and the output terminals 118 of the AC power subconverter 106. In this particular embodiment, the AC voltage VAC supplied by the AC power subconverter 106 includes a small portion of the DC voltage VDC required by the load. The DC voltage subconverter 108 is configured to supply a substantial portion of the DC voltage VDC required by the load.

The DC voltage component provided by the AC power subconverter 106 may be used to overcome a total equivalent series resistance of the inductor LDC and maintain a substantially constant DC current IDC. In addition, if the DC power requirements of the load 102 are altered, the AC power subconverter 106 may temporarily supply a supplemental DC voltage to alter the DC current IDC provided by the inductor LDC to the load 102.

The AC power subconverter 106 may be configured to sense the current IDC flowing through the inductor LDC to maintain a desired level of DC current IDC to the load 102. This is shown in Fig. 10 by the dashed line 1012. Alternatively, the AC power subconverter 106 may sense a DC component of the output current IACDC. Control of power processing components in the AC power subconverter 106 may be performed in a way that keeps current flowing through the inductor LDC at a desired current level, which may be a substantially constant current level, a slowly varying current level, etc.

Fig. 11 illustrates a power supply 1100 according to yet another example embodiment of the present disclosure. The power supply 1100 is similar to the power supply 1000 of Fig. 10. However, the power supply 1100 further includes a capacitor CDC2 coupled between one of the output terminals of the AC power subconverter 106 and the inductor LDC. This configuration may be desirable when the AC power subconverter 106 is configured to supply only unipolar (i.e., positive) voltages at its output terminals 118. In that case, the DC voltage component of the subconverter 106 may be equal to VAVE - VMIN, as explained above with reference to Fig 8. Most of the DC voltage component provided by the AC power subconverter 106 is applied across the capacitor CDC2, and thus does not contribute significantly to the DC voltage VDC provided to the load. In this manner, the AC power subconverter 106 may supply only unipolar voltages (which may simplify its design) while maintaining the desired level of DC current IDC through the inductor LDC. Further, and as described above with respect to the example of Fig. 10, a portion of the DC voltage component provided by the AC power subconverter 106 may be used to overcome the total equivalent series resistance of the inductor LDC.

Additionally, if the DC current IDC required by the load is different than the DC current flowing through the inductor LDC, some DC current will flow through the capacitor CDC2. This will cause a drop in the DC voltage VDC supplied to the load which, in turn, will increase the DC voltage across the inductor LDC, thus causing the DC current flowing through the inductor LDC to return to the level of DC current IDC required by the load. Furthermore, the power supply 1100 includes a feedback network (shown as dashed lines 1112a, 1112b in Fig. 11). The feedback network may be used to effectively transition from one steady state to another steady state when the DC current flowing the inductor LDC is balancing (as described above) without overshoots and oscillations that may lead to additional power losses.

Furthermore, the teachings of this disclosure may be employed in any suitable system, including systems requiring high bandwidth AC and DC components for both voltage and current simultaneously. For example, the teachings of this disclosure may be employed in point of load power supplies for powering microprocessors, envelope tracking power supplies (e.g., for smart phones and base stations), etc.

By employing the teachings of the present disclosure, the output power bandwidth and/or efficiency of power supplies may be increased. This is because the subconverters (e.g., the DC voltage subconverter 108 and the DC current subconverter 110) are configured to reduce an operational voltage applied to transistors of the power supply and to reduce an operational current flowing through the transistors of the power supply. These reductions may save energy in the power supply because transistor switching times may be reduced, conduction losses of the transistors in an ON state may be reduced, amplitudes of the operational voltages and currents during commutation processes may be reduced, gate drive charges may be reduced, energy stored in an output capacitance may be reduced, resistance of transistors in an ON state may be reduced, current through transistor body diodes during freewheeling may be reduced, and/or body diode reverse recovery times may be reduced. Additionally, energy may be indirectly saved because smaller transistors having lower voltage and/or current ratings may be employed. The present teachings can also be used to build ultrafast power supplies having high output power bandwidths and efficiencies exceeding eighty percent (80%) and, in some embodiments, ninety percent (90%).

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A power supply for providing power to a load, comprising:
a first subconverter having input terminals for coupling to a first input power source and output terminals, the first subconverter configured to supply an AC current and an AC voltage at its output terminals;
a second subconverter having input terminals for coupling to a second input power source and output terminals, the second subconverter configured to supply one of a substantially constant DC current and a substantially constant DC voltage at its output terminals;
wherein at least one of the output terminals of the first subconverter is coupled to at least one of the output terminals of the second subconverter; and
wherein the power supply is configured to supply the AC current, the AC voltage, the substantially constant DC current and the substantially constant DC voltage substantially simultaneously to the load.

2. The power supply of claim 1 further comprising a capacitor coupled between another one of the output terminals of the first subconverter and another one of the output terminals of the second subconverter , the capacitor configured to provide said DC voltage, wherein the second subconverter is configured to supply said DC current at its output terminals.

3. The power supply of claim 2 wherein the output terminals of the second subconverter are coupled in parallel with a series combination of the capacitor and the output terminals of the first subconverter.

4. The power supply of claim 1 further comprising an inductor coupled between the output terminals of the first subconverter for providing said DC current, and the second subconverter is configured to supply the DC voltage at its output terminals.

5. The power supply of claim 4 wherein the second subconverter is coupled in series with a parallel combination of the inductor and the output terminals of the first subconverter.

6. The power supply of claim 4 further comprising a capacitor coupled between one of the output terminals of the first subconverter and the inductor, wherein the capacitor is configured to substantially maintain the DC current through the inductor.

7. The power supply of claim 6 wherein the first subconverter is configured to supply only unipolar voltage at its output terminals.

8. The power supply of any one of claims 1-7 further comprising the first input power source and the second input power source, wherein the input terminals of the first subconverter are coupled to the first input power source, and the input terminals of the second subconverter are coupled to the second input power source.

9. The power supply of claim 1 further comprising a third subconverter having input terminals for coupling to a third input power source and output terminals, wherein the third subconverter is configured to supply the other one of said DC current and said DC voltage at its output terminals, and wherein at least one of the output terminals of the third subconverter is coupled to at least one of the output terminals of the first and second subconverters.

10. The power supply of claim 9 wherein the output terminals of one of the first, second and third subconverters are coupled in parallel with a series combination of the output terminals of the other two of said first, second and third subconverters.

11. The power supply of claim 10 wherein the output terminals of the third subconverter are coupled in parallel with the series combination of the output terminals of the first and second subconverters, and wherein the second subconverter is configured to supply the DC voltage.

12. The power supply of claim 11 wherein one of the output terminals of the second subconverter is coupled to a reference voltage; or
wherein one of the output terminals of the first subconverter is coupled to a reference voltage.

13. The power supply of claim 9 wherein the output terminals of one of the first, second and third subconverters are coupled in series with a parallel combination of the output terminals of the other two of said first, second and third subconverters.

14. The power supply of claim 13 wherein the output terminals of the second subconverter are coupled in series with the parallel combination of the output terminals of the first and third subconverters, and wherein the second subconverter is configured to supply the DC voltage; or
wherein the output terminals of the first subconverter are coupled in series with the parallel combination of the output terminals of the second and third subconverters, and wherein the second subconverter is configured to supply the DC voltage.

15. The power supply of any one of claims 9-14 further comprising the first input power source, the second input power source and the third input power source, wherein the input terminals of the first subconverter are coupled to the first input power source, the input terminals of the second subconverter are coupled to the second input power source and the input terminals of the third subconverter are coupled to the third input power source.
